# EUROPEAN PATENT SPECIFICATION

(11) **EP 1 059 022 B1**
(45) Date of publication and mention of the grant of the patent: **23.03.2005**
(21) Application number: 00112100.3
(22) Date of filing: 06.06.2000
(51) Int. Cl.: A01C 1/00

(54) **Process for collecting seeds having fluffy fibers**
Verfahren zum Sammeln von Samen mit aufgelockerten Fasern
Procédé pour la collecte de sémences avec fibres moelleuses

(30) Priority: 09.06.1999 JP 16230099
(43) Date of publication of application: 13.12.2000
(73) Proprietor: Agritecno Yazaki Co., Ltd., Himeji-shi, Hyogo 670-0996 (JP)
(72) Inventor: Kohno, Yasushi, c/o Agritecno Yazaki Co., Ltd., Himeji-shi, Hyogo 670-0996 (JP); Nishiyama, Yugo, c/o Agritecno Yazaki Co., Ltd., Himeji-shi, Hyogo 670-0996 (JP)
(74) Representative: Bogensberger, Burkhard, Dr.

(56) References cited:
- DATABASE WPI Section PQ, Week 199233 Derwent Publications Ltd., London, GB; Class P11, AN 1992-276032 XP002148487 & SU 1 681 986 A (KHARK AGRIC MECHN ELECTRIF INST), 7 October 1991 (1991-10-07)

## Description

This invention relates to a process for collecting seeds.

### Description of the Related Art

Some seeds of plants such as a cattail, reed, cogon, redtop, dandelion and cotton have fluffy fibers that help the seed be blown away by wind or be widely scattered by sticking to an animal body.

Regarding cotton among these plants, a cotton gin has been used for spinning cotton. On the other hand, a fluffy fiber of seed of the plants such as a cattail, reed, cogon and redtop does not have a length long enough to be spun by a cotton gin and to begin with, these plants have rarely been regarded as a cultivated plant.

Recently, cultivation of these plants besides cotton such as a cattail, reed, cogon and redtop, a seed of which has fluffy fibers, has been examined from viewpoints of conservation and improvement with respect to soil and environment.

Upon cultivation of these plants, the fluffy fibers of the seeds are in a tangle with each other among the seeds, resulting in a difficulty in separating grain from grain of the seed and obstruction for sowing work thereof.

Furthermore, these plants, a seed of which has the fluffy fibers, are so-called a wild plant and a germination rate of these plants is much lower than that of an ordinary cultivated plant. Therefore, a treatment for promoting the germination is needed, but then, the fluffy fibers of the seed have been obstructive for such treatment.

For the above reasons, a process for removing the fluffy fibers from the seeds and collecting only the seeds is required, however, such a process requires a very painstaking work, forcing workers to do a troublesome and inefficient work by hand.

### SUMMARY OF THE INVENTION

It is therefore an objective of the present invention to solve the above problems and to provide a process for collecting seeds efficiently and simply at a low cost from a lump consisting of a plurality of seeds having fluffy fibers.

In order to attain the above objective, the present invention is to provide a process for collecting seeds from a lump consisting of a plurality of seeds having fluffy fibers, comprising the steps of: disentangling said lump; and burning the fluffy fibers after the disentanglement of said lump.

The seed having fluffy fibers is a seed of any one among a cattail, reed, cogon and redtop.

The disentanglement of said lump is carried out to such an extent that the step of burning the fluffy fibers is finished in a short period of time.

### BRIEF DESCRIPTION OF THE DRAWINGS

Figure 1 is a schematic appearance of a seed of a cattail (a seed having fluffy fibers);
Figure 2 is a schematic appearance of a seed of a cogon (a seed having fluffy fibers on the surface); and
Figure 3 is a schematic appearance of a seed of a reed (a seed having fluffy fibers).

### DESCRIPTION OF THE PREFERRED EMBODIMENTS

The process for collecting seeds according to the present invention is applicable to collect seeds of any plant besides plants such as a cattail, reed, cogon and redtop provided that the seed has fluffy fibers like a seed of cotton.

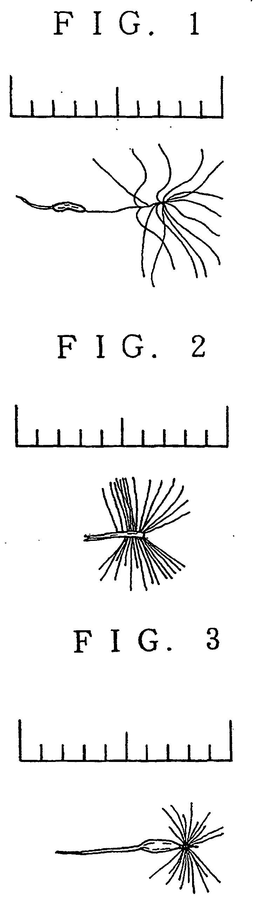

Figure 1 is a schematic appearance of a seed of a cattail. Like a seed of a dandelion, the seed of a cattail has parachute-shaped fluffy fibers, in which a trunk-shaped fiber comes out from a body of the seed and forks into many fine fibers at the end of the trunk-shaped fiber.
Figure 2 is a schematic appearance of a seed of a cogon having fluffy fibers, in which many fibers directly grow from both sides of a body of the seed.
Figure 3 is a schematic appearance of a seed of a reed having fluffy fibers, in which many fibers radially grow from the end of a body of the seed.

In Figs. 1 to 3, a 1-centimeter scale graduated in millimeters is shown together with the schematic appearance of the seed.

According to the present invention, a lump consisting of a plurality of seeds having fluffy fibers is disentangled and then, the fluffy fibers are burned to collect the seeds.

The disentanglement of the lump of the seeds, in which the fluffy fibers are tangled with each other among the seeds, enables that air is supplied to the fluffy fibers sufficiently enough to burn the fluffy fibers in a short period of time upon the burning and that a distance between the burning fluffy fibers and the seed body is enlarged so as to minimize an influence of generated heat and flame upon each seed body. Consequently, the disentanglement of the lump of the seeds is preferably carried out to such an extent that the next step of burning the fluffy fibers is finished in a short period of time

To the contrary, when the fluffy fibers of the lump of the seeds, in which the fluffy fibers are tangled with each other among the seed, are burned without being disentangled prior to the burning, the generated heat and flame upon the burning cause damage to each seed body, resulting in severe deterioration in the germination rate of a plant.

The disentanglement of the lump of the seeds, in which the fluffy fibers are tangled with each other among the seeds, can be carried out in such a manner that the lump is torn off by hand or a tool such as a pair of tweezers and a carding machine provided that the seeds themselves are not damaged by using the carding machine.

Then, the fluffy fibers must be burned. To the contrary, when the fluffy fibers are removed by using chemicals such as a sulfuric acid, the seeds themselves are damaged, thereby causing severe deterioration in the germination rate of a plant.

### EXAMPLES

### (Examination on germination rate)

In the following, examples of the process for collecting seeds according to the present invention are explained.

A lump consisting of a plurality of cattail seeds (about 100 cattail seeds) of about 10 mm in diameter having fluffy fibers tangled with each other among the seeds was disentangled by hand and then, set fire by a cigarette lighter to the fluffy fibers to burn the fluffy fibers off, whereby seeds (A) according to the present invention are collected. The same lump of cattail seeds was directly set fire to the fluffy fibers to burn the fluffy fibers off without being disentangled prior to the burning, whereby seeds (B) are collected. The other same lump of cattail seeds was subjected to a seed-collection work by hand using a pair of tweezers, whereby seeds (C) are collected.

The process for collecting seeds (A) was very simple and the burning of the fluffy fibers finished promptly, and each seed body was flicked away before being caught by flames.

On the other hand, the process for collecting seeds (B) was also very easy but the burning was slow and lasted for a relatively long period of time with smoking. An observation of each body of the seed (B) revealed that some seeds (B) were carbonized. The collection work of the seeds (C) was very troublesome and required a long period of time.

One hundred grains of each kind of seeds were put (sown) on a petri dish of 120 mm in diameter, on which two filter papers were put one on top of the other, then 8 mL of water was added into the petri dish and then, the petri dish was capped. Four additional such petri dishes were prepared for each seed, then the petri dishes were put into a temperature controlled bath of 20°C and then, a germination rate of each seed was investigated.

The results are shown in Table 1. In Table 1, measured germination rates of each seed with respect to number of days after the sowing are shown and numerical values in percent are rounded off to zero decimal place.

**Table 1**

| | Seed | 5 th day | 10 th day | 15 th day | 20 th day | 25 th day | 30 th day |
|---|---|---|---|---|---|---|---|
| Example | A | 4 % | 12 % | 33 % | 56 % | 52 % | 53 % |
| Comparative Example 1 | B | 1 % | 4 % | 5 % | 5 % | 6 % | 7 % |
| Comparative Example 2 | C | 2 % | 10 % | 28 % | 44 % | 53 % | 55 % |

Table 1 reveals that the germination rate of the seed (A) according to the present invention is comparable to that of the seed (C), which is collected by hand, and that the disentanglement of the lump of the seeds prevents any damage from occurring to the seeds even if the fluffy fibers of the seeds are burned off.

### (Examination on application to gel-coated seed)

Since a gel coating of seed enables a high germination rate of the seed and secures cultivation of a plant, the gel coating of seed has been applied to various kinds of seed.

A 20 g-lump of cattail seeds was disentangled by hand and then, set fire by a cigarette lighter to the fluffy fibers to burn the fluffy fibers off, whereby seeds (A) according to the present invention are collected. On the other hand, the other same 20 g-lump of cattail seeds (B) as it is without being disentangled was prepared.

The cattail seeds (A) and seeds (B) were thrown into respective 3 liters of 3-wt%-sodium alginate aqueous solution, then stirred so as to disperse the seeds. Then, the solution in which the seeds float was collected with a pipette and dropped into a 1-wt%-calcium chloride aqueous solutinon for gelation and then, taken out from the calcium chloride aqueous solutinon and washed with tap water.

A number of seeds enclosed in thus formed gel capsule were counted with respect to one hundred capsules of each kind. The results are shown in Table 2. In Table 2, a number of gel capsules is shown with respect to a number of seeds enclosed in a gel capsule.

**Table 2**

| Number of enclosed seeds | Seed (A) | Seed (B) |
|---|---|---|
| 0 | 8 | 37 |
| 1 | 43 | 0 |
| 2 | 40 | 0 |
| 3 | 9 | 0 |
| 4 or more | 0 | 63 |

Table 2 reveals that a majority of capsules include one or two seed for the seeds (A) according to the present invention and that the number of gel capsules is not uniform with respect to the number of seed enclosed in a gel capsule for the seeds (B) according to a conventional process, therefore, no satisfactory gel-coated seed was produced according to the conventional process.

### (Basic examination on chemical treatment of seeds)

A dipping of plant seeds into a chemical solution has been often tried in order to improve a germination rate of the seed and to prevent a damage of the seed due to disease.

However, when the above dipping method is applied to a seed having fluffy fibers, a contact between the seed and the chemicals is often inhibited due to a nature of the fluffy fibers or oils and fats adhering on the fluffy fibers.

As a basic examination on chemical treatment of the seeds, a 20 g-lump of cattail seeds was disentangled by hand and then, set fire by a cigarette lighter to the fluffy fibers to burn the fluffy fibers off, whereby seeds (A) according to the present invention are collected. On the other hand, the other same 20 g-lump of cattail seeds (B) as it is without being disentangled was prepared. The cattail seeds (A) and seeds (B) were dipped into respective 3 liters of water for four hours, then a water absorption of the seed was measured as follows: water adhering on the surface of the seed dipped into the water was well removed by using a filter paper; and a water content of the seed was measured by an infrared moisture meter. As a result, the water content of the seed (A) was 93.1 wt%, while that of the seed (B) was 42.7 wt%. The result suggests that a sufficient effect of the dipping into chemicals can not be attained unless the fluffy fibers of the seed having the fluffy fibers are removed and therefore that the aforementioned effect of the dipping into chemicals can be well attained with respect to the seed (A) of which fluffy fibers are removed by the process according to the present invention.

The aforementioned preferred embodiments are described to aid in understanding the present invention and variations may be made by one skilled in the art without departing from the spirit and scope of the present invention.

The process for collecting seeds according to the present invention is a very simple, efficient and excellent process, by which the seeds can be collected without being caused any substantial damage. Furthermore, a process to form a gel-coated seed can be easily carried out and a treatment of the seeds by various chemicals also can be easily carried out with respect to the seeds collected by the process according to the present invention.

## Claims

1. A process for collecting seeds from a lump consisting of a plurality of seeds having fluffy fibers, comprising the steps of: disentangling said lump; and burning the fluffy fibers after the disentanglement of said lump.

2. The process for collecting seeds according to claim 1, wherein the seed having fluffy fibers is a seed of any one among a cattail, reed, cogon and redtop.

3. The process for collecting seeds according to claim 1 or 2, wherein the disentanglement of said lump is carried out to such an extent that the step of burning the fluffy fibers is finished in a short period of time.

## Patentansprüche

1. Verfahren zum Gewinnen von Samen aus einem Klumpen, der aus einer Vielzahl von Samen mit flaumigen Fasern besteht, mit den Schritten:
Entwirren des Klumpen und Abbrennen der flaumigen Fasern nach der Entwirrung des Klumpen.

2. Das Verfahren zum Gewinnen von Samen nach Anspruch 1, worin der Samen mit den flaumigen Fasern ein Samen ist, der von einem aus der Gruppe Schilf, Schilfgras, japanisches Blutgras und rotes Straussgras stammt.

3. Das Verfahren zum Gewinnen von Samen nach Anspruch 1 oder 2, worin die Entwirrung des Klumpens in einem solchen Ausmass vorgenommen wird, dass der Schritt des Abbrennens der flaumigen Fasern in einer kurzen Zeitspanne erledigt wird.

## Revendications

1. Procédé de recueil de semences à partir d'un amas constitué d'une pluralité de semences présentant des fibres duveteuses, comprenant les étapes consistant à : démêler ledit amas et à brûler les fibres duveteuses après le démêlage dudit amas;

2. Procédé de recueil de semences selon la revendication 1, dans lequel la semence ayant des fibres duveteuses est une semence dé l'un quelconque parmi le jonc, le roseau, l'imperata cylindrique et l'agrostide blanche.

3. Procédé de recueil de semences selon la revendication 1 ou 2, dans lequel le démêlage dudit amas est exécuté dans une proportion telle que l'étape consistant à brûler des fibres duveteuses est achevée en un court intervalle de temps.
